# EUROPEAN PATENT SPECIFICATION

(11) **EP 0 521 628 B1**
(45) Date of publication and mention of the grant of the patent: **20.03.1996**
(21) Application number: 92305471.2
(22) Date of filing: 15.06.1992
(51) Int. Cl.: C07F 9/12, C10M 137/04, C10M 141/10, C10L 1/26

(54) **Organic phosphates and their preparation**
Organische Phosphate und deren Herstellung
Phosphates organiques et leur préparation

(30) Priority: 14.06.1991 US 715675; 14.06.1991 US 715674; 14.06.1991 US 715686
(43) Date of publication of application: 07.01.1993
(73) Proprietor: ETHYL PETROLEUM ADDITIVES, INC., Richmond, Virginia 23219-4304 (US); ETHYL CORPORATION, Baton Rouge, Louisiana 70801 (US)
(72) Inventor: Hanlon, John Vincent, St. Louis, Missouri 63131 (US); Kolich, Charles Howard, Baton Rouge, Louisiana 70816 (US); Bostick, John Gray, Smithtown, Illinois 62285 (US)
(74) Representative: Woods, Geoffrey Corlett

(56) References cited:
- GB-A- 1 146 173
- US-A- 2 520 090
- US-A- 2 698 835
- US-A- 3 169 925

## Description

This invention relates to novel organic phosphate ester combinations and their preparation, combinations which are particularly useful as wear inhibitors in fuels, lubricants and functional fluids.

A need exists for ashless (i.e., metal-free) wear inhibitors for use in lubricating oils and oil-based functional fluids subjected to high temperatures during actual service conditions.

This need is particularly acute in the case of synthetic diester-based lubricants for use as gas turbine lubricants. A need also exists for ashless wear inhibitors for use in middle distillate fuels such as diesel fuels, jet fuels and turbine fuels.

United States Patent US-A-2520090 describes polyphosphate compounds stated to be useful as plasticizers imparting flame resistance made by reacting a mixture of monohydric and dihydric phenols with phosphorus pentachloride or oxychloride.

British specification GB-A-1146173 describes triarylphosphates, made by reacting an alkylated phenol containing unreacted phenol with a phosphorylating agent, e.g. phosphorus oxychloride, which are stated to be useful as plasticizers, in the formulation of hydraulic or other functional fluids, as ignition control or other additives for fuels, and as extreme pressure additives or other additives to lubricants.

This invention provides, in one of its embodiments, a combination of aryl phosphates deemed suitable for use in fulfilling the aforesaid needs. The combination is composed of (i) at least one fuel- and/or oil-soluble aryl phosphate of the formula

(RO)₃PO

wherein each R is, independently, phenyl or an alkyl-substituted phenyl group; and (ii) at least one fuel- and/or oil-soluble aryl polyphosphate of the formula 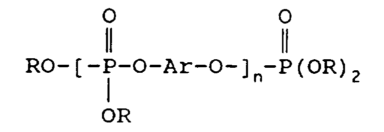 wherein each R is, independently, phenyl or an alkyl-substituted phenyl group, Ar is m-phenylene or an alkyl-substituted m-phenylene group, and n is a whole or number from 1 to 4; said combination containing from 2 to 30% by weight of component (i). When the above formula represents a mixture of the depicted polyphosphates, n is a whole or fractional number from 1 to 4, as n represents the average composition of the mixture.

Among the advantages of these combinations is the ease with which they can be formed pursuant to another embodiment of this invention. In particular, the foregoing combinations can be formed by a process which comprises (a) reacting from 1.9 to 2.1 equivalents of phenol and/or alkyl-substituted phenol with one equivalent of phosphoryl trihalide in the presence of a Lewis acid catalyst, and (b) reacting the intermediate product formed in (a) without any purification with from 0.5 to 0.6 equivalents of resorcinol and/or alkyl-substituted resorcinol per equivalent of phosphoryl trihalide employed in (a) again in the presence of a Lewis acid catalyst. Although other modes of addition can be used, it is preferable in (a) to add the phenol and/or alkyl-substituted phenol to the phosphoryl trihalide, and in (b) to add the resorcinol and/or alkyl-substituted resorcinol to the intermediate product formed in (a). Non-limiting examples of suitable Lewis acid catalysts include AlCl₃, AlBr₃, FeCl₃, FeBr₃, BCl₃, PCl₅, and MgCl₂. In an alternate process, the Lewis acid catalyst is replaced by a stoichiometric amount of a hydrogen halide acceptor and a solvent is used. In step (a) a solution of phenol and/or an alkyl-substituted phenol and hydrogen halide acceptor is added to a solution of the phosphoryl trihalide, and in step (b) a solution of resorcinol and/or an alkyl-substituted resorcinol and hydrogen halide acceptor is added to the intermediate product formed in step (a).

In still another embodiment, the foregoing combinations are formed by a process which comprises (a) reacting from 0. 5 to 0.6 equivalents of resorcinol and/or alkyl-substituted resorcinol with one equivalent of phosphoryl trihalide in the presence of a Lewis acid catalyst, and (b) reacting the intermediate product formed in (a) without any purification with from 1.9 to 2.1 equivalents of phenol and/or alkyl-substituted phenol per equivalent of phosphoryl trihalide employed in (a) again in the presence of a Lewis acid catalyst. Although other modes of addition can be used, it is preferable in (a) and in (b) to add the resorcinolic and the phenolic reactants to the phosphoryl trihalide and to the reaction mixture formed in (a), respectively. In an alternate process, the Lewis acid catalyst is replaced by a stoichiometric amount of a hydrogen halide acceptor and a solvent is used. In step (a) a solution of resorcinol and/ or an alkyl-substituted resorcinol and hydrogen halide acceptor is added to a solution of the phosphoryl trihalide, and in step (b) a solution of phenol and/or an alkyl-substituted phenol and hydrogen halide acceptor is added to the intermediate product formed in step (a).

In each of the above processes, it is preferred to employ the reactants in proportions such that there are at least 3.1 equivalents of ar-hydroxy groups (phenolic reactant plus resorcinolic reactant) per equivalent of phosphoryl trihalide used.

Lubricant compositions which comprise a major proportion of oil of lubricating viscosity -- preferably a diester-based lubricating oil, i.e., a lubricating oil composed predominantly or entirely of one or more diester lubricating oils -- containing and a minor wear-inhibiting amount of a combination of phosphate esters (i) and (ii) as described hereinabove, form the subject of another embodiment of this invention.

Another embodiment is middle distillate fuel compositions which comprise a major proportion of a hydrocarbonaceous middle distillate fuel and a minor wear-inhibiting amount of a combination of phosphate esters (i) and (ii) as described hereinabove

In the various embodiments referred to above, most preferably each R is phenyl and Ar is m-phenylene. Likewise, it is preferred that at least 50% by weight of the aryl polyphosphate corresponds to the above formula of component (ii) wherein n is 1. Particularly preferred are (1) compositions wherein each R is phenyl and at least 50% by weight of the aryl polyphosphate is m-phenylenebis(diphenyl phosphate), and (2) compositions wherein at least 60% by weight of the combination of phosphate esters is a combination of m-phenylenebis(diphenyl phosphate) and triphenyl phosphate in a weight ratio of 1 to 35 parts of m-phenylene-bis(diphenyl phosphate) per each part by weight of triphenyl phosphate.

The above and other embodiments of this invention will be still further apparent from the ensuing description and appended claims.

In forming the combination of aryl phosphates, use can be made of phenol and/or one or more alkyl phenols which contain from 1 to 5 alkyl groups on the ring. Each such alkyl group can contain up to about 18 carbon atoms with the proviso that the alkyl substituent(s) should not sterically hinder the hydroxyl group to such an extent that the substituted phenol is incapable of reacting with the phosphoryl trihalide. Examples of suitable alkyl phenols include o-, m- and/or p-cresol; 2,3-, 2,4-, 2,5-, 2,6-, 3,4-, and/or 3,5-xylenol; o-, m-, and p-ethylphenol; p-tert-butylphenol; p-tert-amylphenol; p-(1,1,3,3-tetramethylbutyl)phenol; p-nonylphenol; p-decylphenol; 2,4,5-trimethylphenol; 2,3,4,5-tetramethylphenol; pentamethylphenol, etc- Cycloalkylphenols such as p-cyclohexylphenol can also be used. Mixtures of two or more different phenols are also suitable.

The phosphoryl trihalide used in forming the phosphate combinations is preferably phosphoryl trichloride, but other halides such as the tribromide can be used.

Resorcinol is the preferred dihydroxybenzene reactant used in forming the phosphate combinations. However alkyl-substituted resorcinols can be used again with the proviso that the compounds are not so sterically hindered as to be unable to undergo reaction on both hydroxyl groups with the intermediate formed from the reaction between the monohydric phenol and phosphoryl trihalide.

A few examples of alkyl-substituted resorcinols that can be used include 5-alkyl-1,3-dihydroxybenzenes where the alkyl group has 1 to about 18 carbon atoms; 2-methyl-1,3-dihydroxylbenzene;4-methyl-1,3-dihydroxylbenzene; 4,5-dimethyl-1,3-dihydroxybenzene; and the like.

The reactions of (a) and (b) above are usually conducted at temperatures in the range of about 30°C to about 200°C. It is desirable and most economical to conduct these reactions without a solvent and in the presence of a catalytic amount of a Lewis acid. However, a suitable inert liquid solvent such as toluene, xylene, aromatic naphtha, or the like can be used.

The amount of catalyst used is typically between 0.1 wt % and 10 wt % based upon the amount of phosphoryl trihalide. More preferred is 0.5 wt % to 5.0 wt % and most preferred is 0.75 wt % to 2.00 wt %.

In place of the Lewis acid catalyst, an at least stoichiometric amount of a hydrogen halide acceptor can be used. Hydrogen halide acceptors which are preferably used in the reactions of (a) and (b) above are typified by tertiary amines such as pyridine, pyrimidine, pyrazine, triethylamine, tributylamine, and triphenylamine. Other known hydrogen halide acceptors are usable, however. It is most desirable to use an inert solvent for the reactions involving hydrogen halide acceptors in order to facilitate handling of the solid hydrohalide by-product. Suitable solvents are toluene, xylene, aromatic naphtha, or the like.

The following examples illustrate various phosphate combinations of this invention, and methods which can be used for their synthesis.

### EXAMPLE 1

A 912.87 g (9.70 mole) portion of phenol (Aldrich, redistilled) and a 766.65 g (5.00 mole) portion of POCl₃ (Aldrich, 99%) were weighed into a dry, four-necked 5-L flask in a glove box. The flask was then set-up in a hood with a mechanical paddle stirrer, a thermometer, a glycolcooled Friedrich condenser, an oil bath, and a rubber septum addition port. Exit gases from the condenser were passed through a trap and into an aqueous NaOH scrubber solution located on a balance. A slow nitrogen purge was maintained into the contents of the flask by a Teflon tube inserted through the rubber septum addition port.
The brownish-gold solution was warmed to 33°C by the oil bath, and 15.42 g (2.01 wt % based on POCl₃) of AlCl₃ (Aldrich) catalyst was cautiously added. The solution was slowly heated to 116°C over a seven hour period while 344.9 g of HCl (97.5% of theory) collected in the exit gas scrubber. The solution was then cooled to room temperature, and a 291.79 g (2.65 mole) portion of resorcinol (Aldrich, recrystallized) was added (in a glove box). The reddish-purple mixture was then slowly heated to 170°C over a five and one-half hour period while 172.1 g of HCl (89.1% of theory) collected in the scrubber.

The viscous golden-yellow crude product was dissolved in toluene (2544.5 g), and the solution was shaken with 10 wt % aqueous NaOH (2x1000 g) and then tap water (3x1000 g) to obtain 3840.4 g of cloudy colorless organic phase. The solution was then dried over 125 g of anhydrous MgSO₄. The liquid was decanted from the drying agent and passed through a bed (28 mm O.D. by 364 mm length) of 101.0 g activated silica gel (Aldrich, 70-230 mesh, 500 M/g, wet packed using toluene). The eluate was then stripped on a rotary evaporator 95°C/0,133 mbar (95°C/0.1 torr) to obtain 1242.7 g (87.2% yield) of a slightly hazy, pale yellow fluid. This liquid was pumped through a 10-micron Teflon membrane filter to obtain 1227.67 g of a clear pale yellow product, properties of which are summarized in Table I hereinafter.

### EXAMPLE 2

A 77.24 g (0.5037 mole) portion of POCl₃ (Aldrich) and 148.6 g toluene were weighed into a 1-L four-necked flask in a glove box. The flask was set-up in a hood and equipped with a paddle stirrer, thermometer, 500-mL addition funnel, and a glycol-cooled Friedrich condenser attached to a nitrogen bubbler. The flask was cooled with an ice bath while a solution of 90.07 g (0.957 mole) phenol (Aldrich, redistilled), 99.64 g (0.986 mole) triethylamine (TEA, Aldrich), and 101.94 g toluene was added from the additional funnel in 2.5 hr at 3-15°C. After stirring for 15 minutes at 7-15°C, a hot (70-90°C) clear blue solution of 30.51 g (0.277 mole) resorcinol (Aldrich, recrystallized) in 118.19 g (1.170 mole) TEA was pressured into the reaction flask through a stainless steel transfer needle from a capped bottle in 13 minutes at 15-29°C. The reaction mixture was stirred for 2.2 hr at 23-32°C, and then 202.7 g of 5 wt % aqueous HCl was added followed by 39.6 g concentrated hydrochloric acid. The mixture was transferred to a separatory funnel, and the lower hazy yellow aqueous layer (514.8 g, pH 1-2) was removed. After washing with water (3x225 g), the cloudy organic phase (513.6 g) was dried over 10.1 g anhydrous magnesium sulfate. Upon standing for 16 hr, the addition of 6.8 g of activated silica gel (Aldrich, 70-230 mesh, 500 m/g) immediately reduced the color of the yellow liquid. The mixture was gravity filtered through paper, and the pale-yellow filtrate as stripped on a rotary evaporator 100°C/1,33 mbar (100°C/1 torr) to obtain 131.3 g (92% yield) of hazy light-yellow fluid. A clear liquid was obtained after pumping the product through a 10-micron membrane filter. Table I, presented hereinafter, summarizes the properties of this product.

### EXAMPLE 3

This experiment was conducted as described in Example 1. A 184.46 g (1.960 mole) portion of phenol was combined with 153.33 g (1.000 mole) of POCl₃ in a 500-mL four necked-flask. The pale-yellow solution was warmed to 38°C, and 3.075 g (2.0 wt % based on POCl₃) of MgCl₂ was added, the pale-orange solution was then slowly heated with an electric mantle for 8.0 hr to a final temperature of 150°C. The caustic scrubber for the exit gases from the reaction increased in weight by 65.1 g (91% theory for HCl). The reaction flask was transferred to a glove box where 57.26 g (0.520 mole) of white resorcinol (Aldrich, recrystallized) was added. The mixture was then slowly heated over three and one-half hours to a final temperature of 140°C with the subsequent increase in the exit gas scrubber weight of 32.7 g (86.2% of theory for HCl). The dark brown viscous liquid (287.33 g) was dissolved in 557.29 g toluene and washed in a 2-L separatory funnel with 5.2 wt % aqueous NaOH (2x250 g). The organic phase was then washed with tap water (3x275 g) until the recovered aqueous phase reached a pH of 7. The cloudy organic phase was dried over anhydrous magnesium sulfate (30.46 g). The mixture was then gravity filtered through paper, and the clear, nearly colorless filtrate was stripped of solvent on a rotary evaporator 0,133 mbar/90°C (0.1 torr/90°C) to obtain 202.2 g (70.8% yield) of a slightly hazy pale-yellow fluid. The liquid was pumped through a 10-micron Teflon membrane filter to obtain 193.36 g of a clear pale-yellow product. Properties of this sample are summarized in Table I below.

### EXAMPLE 4

A 376.44 g (4.00 mole) portion of phenol is combined with 306.66 g (2.00 mole) of POCl₃ in a 1-L four necked flask in a glove box. The light-orange solution is warmed to 40°C and 2.993 g (1.0 wt % based on POCl₃) of pyridine (Baker) is added. The solution is heated with an electric mantle until gas evolution stops (11.0 hr/145°C). The exit gas scrubber shows a weight increase of 139.8 g (95.9% of theory for HCl).

A 114.51 g (1.04 mole) portion of resorcinol is added to the light-yellow reaction mixture in a glove box. The solution is heated to 30°C and 3.062 g (1.0 wt % based on POCl₃) of magnesium chloride is added. The rusty-brown solution is heated until gas evolution stops (7.0 hr/149°C). The subsequent increase in the exit gas scrubber is 64.0 g (84% of theory for HCl). The light-yellow viscous liquid is dissolved in 1070 g toluene. The solution is washed in a 4-L separatory funnel with dilute (2.8 wt %) aqueous NaOH (2x290 g) and then water (3x400 g). The cloudy organic phase is gravity filtered through paper to obtain a clear colorless filtrate. The filtrate is stripped on the rotary evaporator 0,133 mbar/95°C (0.1 torr/95°C) to obtain 484.8 g (84.4% yield) of pale yellow cloudy liquid. The liquid is pumped through a 10-micron Teflon membrane filter to obtain 472.5 g of clear product. Properties of this sample are given in Table I.

### EXAMPLE 5

A 188.56 g (2.00 moles) portion of phenol (Aldrich, redistilled) was combined with 153.35 (1.00 mole) of POCl₃ (Aldrich) in a 500-mL four-necked flask. The clear light-brown solution was warmed to 35°C, and 3.039 g (1.98 wt % based on POCl₃) of aluminum chloride (Aldrich) was added. A small exotherm increased the temperature to 42°C as HCl evolution began. The clear red solution was then slowly heated with an electric mantle for 5 hours to a final temperature of 109°C. The caustic scrubber for the exit gases from the reaction increased in weight by 70.4 g (96.5% of theory for HCl). The reaction flask was transferred to a glove box where 55.04 g (0.500 mole) of resorcinol (Aldrich, recrystallized) was added. The mixture was then slowly heated over 7 hours to a final temperature of 158°C with the subsequent increase in the exit gas scrubber weight of 33.8 g (92.7% of theory for HCl). The light-orange viscous liquid (289.0 g) was dissolved in 467.8 g toluene and washed in a 2-L separatory funnel with 10 wt % aqueous NaOH (2x200 g). The cloudy organic phase was then washed with tap water (4x200g) until the recovered aqueous phase reached a pH of 6.5. The cloudy organic phase was dried over anhydrous magnesium sulfate (11.5 g). The mixture was then gravity filtered through paper, and the clear, nearly colorless filtrate was stripped of solvent on a rotary evaporator (0.1 torr/90°C) to obtain 252.7 g (87.9% yield) of a slightly hazy pale-yellow fluid. The liquid was pumped through a 10-micron Teflon membrane filter to obtain 241.6 of clear pale-yellow product. The properties of this product are summarized in Table I.

**TABLE I**

| Properties | Ex. 1 | Ex. 2 | Ex. 3 | Ex. 4 | Ex. 5 |
|---|---|---|---|---|---|
| Composition (HPLC wt%) | | | | | |
| Triphenyl phosphate | 12.6 | 2.3 | 11.0 | 11.9 | 14.7 |
| Diphosphate | 57.2 | 78.1 | 66.0 | 65.8 | 63.4 |
| APHA Color | 50-60 | 300 | 150 | 60 | 60 |
| Viscosity at 25°C, mPas | 425 | 551 | 397 | 326 | 345 |
| Density at 25°C, g/mL | 1.293 | 1.297 | 1.292 | 1.288 | 1.288 |
| Acid Number, mg KOH/g | 0.17 | 0.98 | 0.46 | 0.75 | 0.09 |
| Ionic Cl, ppm | 0.5 | 6 | 12 | 1.5 | < 1.0 |

### EXAMPLE 6

This experiment was carried out as described in Example 1. A 384.6 g (1.75 mole) portion of nonylphenol was combined with 137.94 g (0.8996 mole) POCl₃ in a 1-L four-necked flask. A 2.78 g (0.0208 mole) portion of AlCl₃ was added to the mixture at 29°C, and the mixture was heated to 118°C over 3 hr. After cooling to room temperature, a 52.5 g (0.477 mole) portion of resorcinol was added to the reaction mixture. The reaction was completed by heating to 170°C in 2.5 hr. After cooling to 45°C, toluene (433.4 g) was added, and the solution was washed with 10 wt % aqueous NaOH (200 g) and twice with water. To obtain good phase separation for the last wash, the pH had to be adjusted to 10 with addition of aqueous NaOH. The organic phase was dried over anhydrous MgSO₄ (25.7 g), gravity filtered through paper, and the filtrate stripped on a rotary evaporator 0,133 mbar/100°C (0.1 torr/100°C) to obtain 458.0 g (96.1% yield) of pale-yellow oil. Properties are summarized in Table II below.

### EXAMPLE 7

Example 6 was repeated replacing the nonylphenol with a mixture of phenol (91.30 g, 0.970 mole) and nonylphenol (213.75 g, 0.970 mole). A 153.32 g (1.00 mole) portion of POCl₃, 58.36 g (0.530 mole) resorcinol and 3.130 g (0.023 mole) AlCl₃ were used. The pale-yellow liquid product weighed 379.3 (93.1 % yield). Table II sets forth physical properties of this product.

### EXAMPLE 8

A 55.1 g (0.50 mole) portion of resorcinol (MCB, recrystallized, 99.93 area % by GC) was weighed into a dry four-necked 1-L flask in a glove box. The flask was then set-up in a hood with a mechanical paddle stirrer, a thermometer, a rubber septum addition port, and a Friedrich water condenser. Exit gases from the condenser were passed through a dry glass trap and into an aqueous NaOH scrubber solution located on a balance. A slow nitrogen flow was maintained on the exit gas line during the reaction to prevent back-up of the scrubber solution.

A 153.3 g (1.00 mole, 93 ml) portion of POCl₃ (Aldrich, 99%) was added to the flask by nitrogen pressure from a septum capped bottle using a stainless steel transfer needle. The easily stirred slurry was heated to 113°C with less than 0.3 g of HCl being collected in the exit gas scrubber. After cooling to 40°C, a 1.493 g (0.0112 mole) portion of anhydrous AlCl₃ (Aldrich) catalyst was added to the purple-brown liquid. The solution was slowly heated to 110°C in 90 minutes while 37.5 g of HCl collected in the exit gas scrubber. The yellow-brown mixture was cooled to 63°C and a 194.2 g (2.064 mole) portion of phenol (Aldrich, redistilled) was added in 15 min. The solution was heated to 155°C in 2 hr while an additional 66.0 g (94.6% of theory for HCl) of HCl was collected in the scrubber. Addition of another 0.93 g (0.0070 mole) AlCl₃ at 120-129°C did not cause release of additional HCl.

The viscous yellow-brown crude product (293.4 g) was dissolved in toluene (446.7 g), and the solution was washed with 5 wt % aqueous NaOH (3x200 g) and water (2x230 g).

The cloudy pale-yellow organic phase (722.2 g) was dried over 15.17 g of anhydrous magnesium sulfate. The mixture was gravity filtered through paper (Whatman 2V), and the clear filtrate was stripped on a rotary evaporator 95°C/0,133 mbar (95°C/0.1 torr) to obtain 260.1 g (90.5% yield) of a slightly hazy, viscous, light-yellow liquid. The liquid was pumped through a 10 micron Teflon membrane filter to remove the hazy appearance. Properties of this product are summarized in Table II below.

### EXAMPLE 9

Example 8 was repeated using the same reagents but with a higher level of resorcinol. Phosphoryl chloride (153.5 g, 1.001 mole) was added to resorcinol (66.15 g, 0.6008 mole) at 25°C in 5 minutes. The temperature dropped to 20°C, and there was no evidence of HCl evolution from the easily stirred slurry. A 1.561 g (0.0117 mole) portion of anhydrous AlCl₃ was added, and the mixture was warmed gently with an electric mantle. At 30°C, HCl evolution began slowly and nearly all solids had dissolved in the red-brown liquid. Gas evolution continued at 60-80°C for 1 hr. A weight increase of 44.0 g was recorded for the exit gas scrubber, and the solution color changed to yellow-brown. Liquid phenol (193.2 g, 2.053 mole) was then added 5 minutes at 70-77°C. The mixture was held at 72-78°C for 2.5 hr during which the scrubber weight increase rose to 99.0 g (90% of theory for HCl). The solution was then heated to 122°C in 2 hr with the scrubber weight gain reaching a constant value of 103.5 g (94.5% of theory). The clear orange liquid was sparged with nitrogen overnight at ambient temperature. A solution of the crude product (299.5 g) in toluene (449.4 g) was washed with 10 wt % aqueous NaOH (4x200 g) and then deionized water (3x300 g) to obtain 697.9 g of a cloudy colorless organic phase. The solution was dried over 16.3 anhydrous MgSO₄, gravity filtered through paper, and stripped on a rotary evaporator to obtain 238.1 g (84.8% yield) of a slightly hazy, nearly colorless viscous liquid. The liquid was pumped through a 10 micron Teflon membrane filter to remove the hazy appearance.

Properties of the products formed in Examples 6-9 are summarized in Table II.

**TABLE II**

| Properties | Ex. 6 | Ex. 7 | Ex. 8 | Ex. 9 |
|---|---|---|---|---|
| Composition (HPLC wt%) | | | | |
| Triphenyl phosphate | -- | -- | 17.4 | 9.2 |
| Diphosphate | -- | -- | 24.6 | 22.4 |
| APHA Color | -- | -- | 100 | 100-200 |
| Viscosity at 25°C, mPas | 111,400 | 10,350 | 488 | 1270 |
| Density at 25°C, g/mL | 1.051 | 1.129 | 1.296 | 1.312 |
| Acid Number, mg KOH/g | 0.10 | 0.07 | 0.41 | 0.07 |
| Ionic Cl, ppm | 27 | 330 | < 40 | 97 |

The excellent thermal stability of the products of this invention was illustrated by a series of thermogravimetric analyses in which weight loss of various phosphorus-containing materials was determined in the range of up to 600°C. Subjected to this test were the phosphate combination produced as in Example 1 and the phosphate combination produced as in Example 6 and 7. For comparative purposes TGA analyses were also conducted on samples of tri-n-octyl phosphate (TOP), tricresyl phosphate (TCP), tri-n-butoxy-ethyl phosphate (TBEP), and cresyl diphenyl phosphate (CDP). The results of these determinations are summarized in the following table:

**TABLE III**

| - TGA, % LOSS | | | | | | | |
|---|---|---|---|---|---|---|---|
| | Temperature, °C | | | | | | |
| Phosphorus Compound | 100 | 200 | 300 | 350 | 400 | 500 | 600 |
| Example 1 | 0.0 | 1.3 | 15.8 | 39.0 | 77.8 | 97.4 | 98.8 |
| Example 6 | 0.0 | 0.6 | 4.8 | 8.4 | 20.2 | 81.5 | -- |
| Example 7 | 0.0 | 0.6 | 4.3 | -- | 23.9 | 92.9 | -- |
| TOP | 0.0 | 3.3 | 98.3 | -- | 98.7 | -- | -- |
| TCP | 0.0 | 1.2 | 76.3 | -- | 99.1 | -- | -- |
| TBEP | 0.5 | 2.4 | 96.5 | -- | 97.1 | -- | -- |
| CDP | 0.0 | 1.4 | 88.0 | -- | 99.5 | 99.6 | -- |

The antiwear properties of the phosphate combinations of this invention, are illustrated by the results obtained in a series of standard tests known as the ball on cylinder lubricity evaluation test. The test procedure is ASTM D 5001-90. In these tests scar diameter measurements are taken, and thus the smaller the scar diameter, the more effective the additive composition as regards wear inhibition. For convenience, the results are herein expressed in numerical values representing the scar diameter in millimeters multiplied by 100.

In a first series of tests the aryl phosphate combination formed as in Example 5 was blended into a commercially-available jet fuel at a concentration of 72 g/m³ (25 pounds per thousand barrels (ptb)). This blended fuel was stored at 25°C (77°F) under ambient light conditions for two months prior to conducting the lubricity test, to be sure that the fuel composition had good storage stability. The clear base fuel in this test showed a scar diameter of 67 whereas the fuel containing the phosphate combination of this invention exhibited a scar diameter of 44.

In another such test the base fuel had a scar diameter of 60 whereas the presence therein of 80 parts per million (ppm) of a combination formed as in Example 4 reduced the scar diameter to 40.

Another series of such lubricity tests were conducted wherein the base fuel was a commercial JP-4 jet fuel. This fuel as received gave a scar diameter of 60. The presence in the fuel of an aryl phosphate combination produced as in Example 5 at the level of 72 g/cm³ (25 ptb) gave a scar diameter of 46. It is interesting to note that the presence in the same base fuel of comparable concentrations of tricresyl phosphate, trioctyl phosphate, and tributoxyethyl phosphate gave, respectively, scar diameters of 80, 80 and 83.

When the lubricity test was applied to a series of fuels based on a low sulfur grade of commercially-available diesel fuel, the following results were obtained:

| Fuel composition | Scar diameter |
|---|---|
| Base fuel | 65 |
| Base fuel + 72g/cm³ (25 ptb) combination per Example 5 | 47 |
| Base fuel + 72g/cm³ (25 ptb) tricresyl phosphate | 64 |
| Base fuel + 72g/cm³ (25 ptb) trioctyl phosphate | 65 |
| Base fuel + 72g/cm³ (25 ptb) tributoxyethyl phosphate | 66 |

Another series of lubricity tests was carried out using commercially-available jet fuel. The test results are tabulated below.

| Fuel composition | Scar diameter |
|---|---|
| Base fuel | 68 |
| Base fuel + 72g/cm³ (25 ptb) combination per Example 5 | 56 |
| Base fuel + 72g/cm³ (25 ptb) tricresyl phosphate | 67 |
| Base fuel + 72g/cm³ (25 ptb) trioctyl phosphate | 68 |
| Base fuel + 72g/cm³ (25 ptb) tributoxyethyl phosphate | 72 |

A group of tests were conducted in which two different aryl phosphate combinations were blended into a commercially-available jet fuel at several different concentration levels. One such additive combination was produced as in Example 5 and thus, referring to the formulas given above, R was phenyl and Ar was m-phenylene. In the other such additive combination, R was nonylphenyl and Ar was m-phenylene. The results of these tests are presented below wherein "Combination A" refers to the combination wherein R was phenyl, and "Combination B" refers to the combination wherein R was nonylphenyl:

| Fuel composition | Scar diameter |
|---|---|
| Base fuel | 73 |
| Base fuel + 80 ppm Combination A | 39 |
| Base fuel + 40 ppm Combination A | 56 |
| Base fuel + 20 ppm Combination A | 67 |
| Base fuel + 10 ppm Combination A | 69 |
| Base fuel + 80 ppm Combination B | 68 |
| Base fuel + 40 ppm Combination B | 67 |
| Base fuel + 20 ppm Combination B | 68 |
| Base fuel + 10 ppm Combination B | 68 |

The phosphate combinations of this invention can be used as antiwear agents in any middle distillate fuel suitable for use in the operation of a jet engine, a gas turbine engine or a diesel engine. Such fuels are predominantly hydrocarbonaceous in composition and are typically characterized by boiling in the range of about 130°C to about 400°C. It is to be noted that the term "middle distillate fuel" is not intended to be restricted to straight-run distillate fractions. These middle distillate fuels or fuel oils can comprise straight run distillate fuel oils, catalytically or thermally cracked (including hydrocracked) distillate fuel oils, or mixtures of straight run distillate fuel oils, naphthas and like stocks, with cracked distillate stocks. Moreover, such fuel oils can be treated in accordance with well known operations such as acid or caustic treatment, hydrogenation, solvent refining, clay treatment, and the like. The base fuels thus include diesel fuels, kerosenes, jet fuels, gas oils, cycle oils etc. While derived principally from petroleum, the fuels can be derived at least in part from shale, tar sands, coal, lignite, biomass, and similar sources. The fuels can contain suitable oxygenated blending components, such as alcohols, ethers, etc, including in situ produced oxygenates.

In general, the compositions of this invention are employed in the base fuel in an amount at least sufficient to inhibit wear between contacting metal surfaces. Ordinarily, such amounts will fall within the range of from 0.005 to 5 percent by weight of the base fuel, and more typically within the range of from 0.05 to 2 percent by weight based on the weight of the base fuel.

Various additional additives may be used in the fuels of this invention. These include antioxidants, conductivity improvers (also known as static dissipator additives), metal deactivators, icing inhibitor additives, cetane improvers, combustion improvers (including smoke suppressants), detergent/dispersant additives, induction system cleanliness agents, corrosion inhibitors, demulsifying agents, top cylinder lubricants, dyes, and the like.

Of the antioxidants, use of phenolic antioxidants is preferred, although other fuel-soluble antioxidants are available and can be used. Other suitable types of antioxidants include amine antioxidants, phosphite esters, sulfur-containing antioxidants, and other similar substances. Amounts of antioxidant in the range of about 1 to about 10 pounds per thousand barrels are typical. However, greater or lesser amounts can be used whenever deemed necessary or desirable.

Various conductivity improvers suitable for use in the fuels of this invention are available in the market-place. These include ASA-3 marketed by Royal Lubricants Co., and Stadis 450 marketed by E. I. duPont de Nemours Co. Typically, conductivity improvers are additives that can be dissolved in the fuel in the amount necessary to increase the fuel conductivity to within a suitable range, such as between about 50 and about 600 pS/m as determined by ASTM D-2624. For further detail concerning conductivity improvers which can be utilized, see U.S. Pat. Nos. 3,449,097; 3,455,665; 3,578,421; 3,652,238; 3,676,647; 3,674,450; 3,784,362; 3,917,466; 4,029,480; 4,113,443; 4,252,542; 4,259,087; 4,333,741; 4,356,002 and 4,416,668.

Metal deactivators which can be used in the fuels of this invention include N,N'-disalicylidene-1,2-propanedia-mine, N,N'-disalicylidene-1,2-cyclohexanediamine, N,N'-disalicylidene-1,2-ethanediamine, N,N"-disalicylidene-N'-methyl-dipropylenetriamine. 8-hydroxyquinoline, ethylene diaminetetracarboxylic acid, acetylacetone, octylacetoace-tate, and like substances. Thiadiazoles such as HITEC® 314 additive (Ethyl Petroleum Additives, Inc.; Ethyl Petroleum Additives, Ltd.; Ethyl Canada Ltd.; Ethyl S.A.) can also be used for this purpose. Amounts of up to 5.7g/m³ (2 pounds per thousand barrels) of metal deactivator are ordinarily sufficient, but higher concentrations can be used whenever necessary or desirable.

Icing inhibitor additives that can be used include, for example, alcohols, glycols, monocarboxylic acid esters of polyoxyalkylene glycols, and nitroketonized amides. Amounts of up to 143g/m³ (50 pounds per thousand barrels) are usually sufficient.

Detergent/dispersant additives which are suitable for use in the fuels of this invention include amides and imides especially succinimides (e.g., U.S. Pat. Nos. 3,471,458; 3,655,351; 4,596,663; and 4,744,798); mono- and polycarboxylic acid esters especially succinic acid esters (e.g., U.S. Pat. Nos. 3,639,242; 3,708,522; and 4,596,663); carbamates (e.g., U.S. Pat. No. 3,652,240); hydrocarbyl polyamines (e.g., U.S. Pat. Nos. 3,753,670 and 3,756,793); and hydrocarbyl polyether polyamines (e.g., U.S. Pat. No. 4,778,481).

As used herein the term "fuel-soluble" means that the composition in the particular base fuel employed dissolves at 25°C to at least the minimum concentration herein specified.

The above phosphate combinations can be used as antiwear agents in any of a variety of oils of lubricating viscosity. Preferably they are used in a base oil composed by volume of at least 50% and up to and including 100% of one or more mineral oils, or at least 50% and up to and including 100% of one or more synthetic ester oils.

The concentrations of the phosphate combinations in the base oils are minor wear-inhibiting amounts. These amounts will of course vary depending upon such factors as the type of base oil employed, the type of service to be encountered, and the amount of wear protection desired. In general, however, amounts in the range of 0.005 to 10 weight percent based on the total weight of the finished lubricant will usually be sufficient. Preferred amounts are in the range of 0.25 to 5 weight percent again based on the total weight of the finished lubricant. The phosphate combinations can be included in additive concentrates of the type used in formulating finished lubricants (such as crankcase motor oils for gasoline engines, crankcase motor oils for diesel engines, gear oils, tractor oils, etc.) and functional fluids (such as transmission fluids, hydraulic fluids, cutting and machining oils, etc.).

Further embodiments of this invention are additive concentrates and lubricant or functional fluid compositions containing particular combinations of one or more additive components (hereinafter described) together with a phosphate combination employed pursuant to this invention. For convenience, these are referred to hereinbelow as Embodiments A, B, C, D, and E.

### Embodiment A

One such embodiment is an oil of lubricating viscosity or an additive concentrate for use in oil of lubricating viscosity containing at least the following components:
1) one or more oil-soluble zinc hydrocarbyl dithiophosphates; and
2) an aryl phosphate ester combination composed of (i) at least one oil-soluble aryl phosphate of the formula

   (RO)₃PO

   wherein each R is, independently, phenyl or an alkyl-substituted phenyl group or an alkenyl-substituted phenyl group; and (ii) at least one oil-soluble aryl polyphosphate of the formula 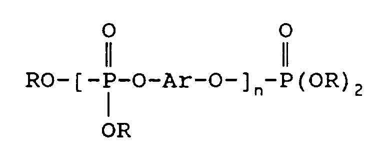 wherein each R is, independently, phenyl or an alkyl-substituted phenyl group or an alkenyl-substituted phenyl group, Ar is m-phenylene or an alkyl-substituted m-phenylene group, and n is a whole or fractional number from 1 to 4; said combination containing from 2 to 30% by weight of component (i). The relative proportions of these components is preferably such that the weight ratio of phosphorus in 1) to total phosphorus in 2) is in the range of from 0.001:1 to 100:1. These combinations serve to inhibit wear; to inhibit deposit, varnish and/or sludge formation and/or deposition; and to protect the lubricant or functional fluid composition from premature oxidative degradation, especially at elevated temperatures. The quantity of these components 1) and 2) added to the base oil of lubricating viscosity is a minor wear-inhibiting amount, and is usually such that the total concentration of phosphorus provided by components 1) and 2) (proportioned as just described) falls in the range of 0.005 to 5 percent by weight of the total composition.

### Embodiment B

Another embodiment of this invention is an oil of lubricating viscosity or an additive concentrate for use in oil of lubricating viscosity containing at least the following components:
1) an aryl phosphate ester combination composed of (i) at least one oil-soluble aryl phosphate of the formula

   (RO)₃PO

   wherein each R is, independently, phenyl or an alkyl-substituted phenyl group or an alkenyl-substituted phenyl group; and (ii) at least one oil-soluble aryl polyphosphate of the formula 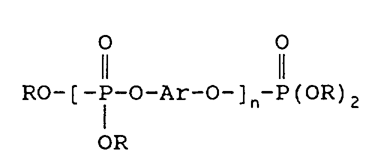 wherein each R is, independently, phenyl or an alkyl-substituted phenyl group or an alkenyl-substituted phenyl group, Ar is m-phenylene or an alkyl-substituted m-phenylene group, and n is a whole or fractional number from 1 to 4; said combination containing from 2 to 30% by weight of component (i); and
2) one or more oil-soluble ashless dispersants containing basic nitrogen, preferably a succinimide or succinic ester-amide.

The relative proportions of these components is preferably such that the weight ratio of component 1) to component 2) is in the range of from 0.001:1 to 100:1. These combinations serve to inhibit deposit, varnish and/or sludge formation and/or deposition; and to protect the lubricant or functional fluid composition from premature oxidative degradation, especially at elevated temperatures. The quantity of these components 1) and 2) added to the base oil of lubricating viscosity is a minor wear-inhibiting amount, and is usually such that the total concentration of components 1) and 2) (proportioned as just described) falls in the range of 0.005 to 20 percent by weight of the total composition.

Any of a variety of ashless dispersants can be utilized as component 2) of the compositions of this invention. These include the following types:

Type A - Carboxylic Ashless Dispersants. These are reaction products of an acylating agent such as a monocarboxylic acid, dicarboxylic acid, polycarboxylic acid, or derivatives thereof with compounds which contain amine and/ or hydroxyl groups (and optionally, other groups such as mercapto groups, etc.). These products, herein referred to as carboxylic ashless dispersants, are described in many patents, including British patent specification No. 1,306,529 and the following U. S. Patents: 3,163,603; 3,184,474; 3,215,707; 3,219,666; 3,271,310; 3,272,746; 3,281,357; 3,306,908; 3,311,558; 3,316,177; 3,340,281; 3,341,542; 3,346,493; 3,381,022; 3,399,141; 3,415,750; 3,433,744; 3,444,170; 3,448,048; 3,448,049; 3,451,933; 3,454,607; 3,467,668; 3,522,179; 3,541,012; 3,542,678; 3,574,101; 3,576,743; 3,630,904; 3,632,510; 3,632,511; 3,697,428; 3,725,441; 3,868,330; 3,948,800; 4,234,435; and Re 26,433.

Type B - Hydrocarbyl Polyamine Dispersants. This category of ashless dispersants which can be used as component 3) is likewise well known to those skilled in the art and fully described in the literature. The hydrocarbyl polyamine dispersants are generally produced by reacting an aliphatic or alicyclic halide (or mixture thereof) containing an average of at least about 40 carbon atoms with one or more amines, preferably polyalkylene polyamines. Examples of such hydrocarbyl polyamine dispersants are described in U.S. Pat. Nos. 3,275,554; 3,438,757; 3,454,555; 3,565,804; 3,671,511; 3,821,302; 3,394,576; and in European Patent Publication No. 382,405.

Type C - Mannich polyamine dispersants. This category of ashless dispersant which can be utilized is comprised of reaction products of an alkyl phenol, with one or more aliphatic aldehydes containing from 1 to 7 carbon atoms (especially formaldehyde and derivatives thereof), and polyamines (especially polyalkylene polyamines of the type described hereinabove). Examples of these Mannich polyamine dispersants are described in the following U.S. Patents: 2,459,112; 2,962,442; 2,984,550; 3,036,003; 3,166,516; 3,236,770; 3,368,972; 3,413,347; 3,442,808; 3,448,047; 3,454,497; 3,459,661; 3,493,520; 3,539,633; 3,558,743; 3,586,629; 3,591,598; 3,600,372; 3,634,515; 3,649,229; 3,697,574; 3,703,536; 3,704,308; 3,725,277; 3,725,480; 3,726,882; 3,736,357; 3,751,365; 3,756,953; 3,793,202; 3,798,165; 3,798,247; 3,803,039; 3,872,019; 3,980,569; and 4,011,380.

Type D - Polymeric polyamine dispersants. Also suitable for use of the compositions of this invention are polymers containing basic amine groups and oil solubilizing groups (for example, pendant alkyl groups having at least about 8 carbon atoms). Such polymeric dispersants are herein referred to as polymeric polyamine dispersants. Such materials include, but are not limited to, interpolymers of decyl methacrylate, vinyl decyl ether or a relatively high molecular weight olefin with aminoalkyl acrylates and aminoalkyl acrylamides. Examples of polymeric polyamine dispersants are set forth in the following patents: U.S. Pat. Nos. 3,329,658; 3,449,250; 3,493,520; 3,519,565; 3,666,730; 3,687,849; 3,702,300.

Type E - Post-treated basic nitrogen-containing and/or hydroxyl-containing ashless dispersants. As is well known in the art, any of the ashless dispersants referred to above as types A-D can be subjected to post-treatment with one or more suitable reagents such as urea, thiourea, carbon disulfide, aldehydes, ketones, carboxylic acids, anhydrides of low molecular weight dibasic acids, boron compounds, nitriles, epoxides, phosphorus compounds, and the like. Such post-treated ashless dispersants can be used. Preferably, the post-treated dispersant contains residual basic nitrogen. Examples of post-treatment procedures and post-treated ashless dispersants are set forth in the following U.S. Patents: U.S. Pat. Nos. 3,036,003; 3,087,936; 3,200,107; 3,216,936; 3,254,025; 3,256,185; 3,278,550; 3,281,428; 3,282,955; 3,312,619; 3,366,569; 3,367,943; 3,373,111; 3,403,102; 3,442,808; 3,455,831; 3,455,832; 3,493,520; 3,502,677; 3,513,093; 3,533,945; 3,539,633; 3,573,010; 3,579,450; 3,591,598; 3,600,372; 3,639,242; 3,649,229; 3,649,659; 3,658,836; 3,697,574; 3,702,757; 3,703,536; 3,704,308; 3,708,522; 4,025,445; 4,857,214; and 4,971,598.

Mannich-based derivatives of hydroxyaryl succinimides that have been post-treated with C₅-C₉ lactones such as ε-caprolactone and optionally with other post-treating agents as described for example in U.S. Pat. No. 4,971,711 can also be utilized in the practice of this invention. Preferably, such post-treated Mannich-based derivatives of hydroxyaryl succinimides contain basic nitrogen. The disclosures of U.S. Pat. No. 4,971,711, as well as related U.S. Pat. Nos. 4,820,432; 4,828,742; 4,866,135; 4,866,139; 4,866,140; 4,866,141; 4,866,142; 4,906,394; and 4,913,830 are refer to additional suitable basic nitrogen-containing ashless dispersants which may be utilized.

One preferred category of post-treated ashless dispersants is comprised of basic nitrogen-containing and/or hydroxyl group-containing ashless dispersants which have been heated with (i) a phosphorus compound such that they contain phosphorus, or (ii) a boron compound such that they contain boron, or preferably (iii) a phosphorus compound and a boron compound such that they contain boron and phosphorus. Such post-treated ashless dispersants preferably contain residual basic nitrogen. Examples of such dispersants and methods for their production are described in U.S. Pat. Nos. 3,087,936; 3,254,025; 3,184,411; 3,185,645; 3,235,497; 3,265,618; 3,281,428; 3,338,832; 3,282,955; 3,284,410; 3,324,032; 3,325,567; 3,403,102; 3,344,069; 3,502,677; 3,513,093; 3,511,780; 3,533,945; 3,623,985; 3,718,663; 3,865,740; 3,950,341; 3,991,056; 4,097,389; 4,234,435; 4,338,205; 4,428,849; 4,554,086; 4,615,826; 4,648,980; 4,747,971; 4,634,543; 4,857,214; and 4,873,004.

### Embodiment C

Still another embodiment of this invention is an oil of lubricating viscosity or an additive concentrate for use in oil of lubricating viscosity containing at least the following components:
1) one or more oil-soluble zinc hydrocarbyl dithiophosphates;
2) an aryl phosphate ester combination of the type described hereinabove; and
3) one or more oil-soluble ashless dispersants containing basic nitrogen, preferably a succinimide or succinic ester-amide.

The relative proportions of these components is preferably such that the weight ratio of phosphorus in 1) to total phosphorus in 2) is in the range of from 0.001:1 to 100:1, and such that the weight ratio of component 2) to component 3) is in the range of from 0.001:1 to 100:1. These combinations serve to inhibit wear; to inhibit deposit, varnish and/or sludge formation and/or deposition; and to protect the lubricant or functional fluid composition from premature oxidative degradation, especially at elevated temperatures. The quantity of these components 1), 2) and 3) (proportioned as above) added to the base oil of lubricating viscosity is a minor wear-inhibiting amount, and is usually such that the total concentration of phosphorus provided by components 1) and 2) falls in the range of 0.005 to 5 percent by weight of the total composition.

### Embodiment D

Yet another embodiment of this invention is an oil of lubricating viscosity or an additive concentrate for use in oil of lubricating viscosity containing at least the following components:
1) one or more oil-soluble sulfur-containing antiwear and/or extreme pressure agents; and
2) an aryl phosphate ester combination of the type described hereinabove; and
3) optionally, one or more oil-soluble ashless dispersants containing basic nitrogen, preferably a succinimide or succinic ester-amide; and
4) optionally, one or more oil-soluble zinc hydrocarbyl dithiophosphates.

It will be noted that in these compositions there are at least two required components, designated 1) and 2). This embodiment also includes two three-component mixtures, the first composed of the components designated as 1), 2) and 3) and the second composed of the components designated as 1), 2) and 4). And additionally this embodiment comprises the four-component combinations composed of the components designated as 1), 2), 3) and 4). In these various combinations the relative proportions of these components is preferably such that the weight ratio of sulfur in 1) to total phosphorus in 2) is in the range of from 0.01:1 to 100:1; such that when component 3) is employed, the weight ratio of component 2) to component 3) is in the range of from 0.001:1 to 100:1; and such that when component 4) is employed, the weight ratio of total phosphorus in component 2) to phosphorus in component 4) is in the range of from 0.01:1 to 1000:1. These combinations serve to inhibit wear; to inhibit deposit, varnish and/or sludge formation and/or deposition; and to protect the lubricant or functional fluid composition from premature oxidative degradation, especially at elevated temperatures. The quantity of these components 1) and 2) added to the base oil of lubricating viscosity is a minor wear-inhibiting amount, and preferably is such that the total concentration of sulfur and phosphorus provided by components 1) and 2) respectively, (proportioned as described above) falls in the range of 0.005 to 20 percent by weight of the total composition. When component 3) is used --with or without component 4) -- the quantity of component 3) added to the base oil of lubricating viscosity is a minor dispersant amount, and is usually such as to maintain the proportions given above. Similarly, when component 4) -- with or without component 3) -- is used, the quantity of component 4) added to the base oil of lubricating viscosity is a minor wear-inhibiting amount, and is usually such as to maintain the proportions given above.

Various types of sulfur-containing antiwear and/or extreme pressure agents can be used in the practice of Embodiment D.

When including component 3) in the practice of Embodiment D, use can be made of any of the ashless dispersants referred to hereinabove with reference to Embodiment B. When including component 4) in the practice of Embodiment D, use can be made of any of the zinc hydrocarbyl dithiophosphates referred to hereinabove with reference to Embodiment A.

### Embodiment E

A still further embodiment of this invention is an oil of lubricating viscosity or an additive concentrate for use in oil of lubricating viscosity containing at least the following components:
1) at least one oil-soluble amine salt of at least one dihydrocarbyl ester of a thiophosphoric acid; and
2) an aryl phosphate ester combination of the type described hereinabove; and
3) optionally, one or more oil-soluble ashless dispersants containing basic nitrogen, preferably a succinimide or succinic ester-amide; and
4) optionally, one or more oil-soluble sulfur-containing antiwear and/or extreme pressure agents.

It will be noted that in these compositions there are at least two required components, designated 1) and 2). This embodiment also includes two three-component mixtures, the first composed of the components designated as 1), 2) and 3) and the second composed of the components designated as 1), 2) and 4). And additionally this embodiment comprises the four-component combinations composed of the components designated as 1), 2), 3) and 4). In these various combinations the relative proportions of these components is preferably such that the weight ratio of phosphorus in 1) to total phosphorus in 2) is in the range of from a 0.001:1 to 100:1; such that when component 3) is employed, the weight ratio of component 2) to component 3) is in the range of from 0.001:1 to 100:1; and such that when component 4) is employed, the weight ratio of total phosphorus in component 2) to sulfur in component 4) is in the range of from 0.01:1 to 100:1- These combinations serve to inhibit wear; to inhibit deposit, varnish and/or sludge formation and/or deposition; and to protect the lubricant or functional fluid composition from premature oxidative degradation, especially at elevated temperatures. The quantity of these components 1) and 2) added to the base oil of lubricating viscosity should be such that the total concentration of phosphorus provided by components 1) and 2) (proportioned as described above) falls in the range of 0.005 to 5 percent by weight of the total composition. When component 3) is used, the quantity thereof added to the base oil of lubricating viscosity is a minor dispersant amount, and is usually within the proportions given above. Similarly, when component 4) is used, the quantity thereof added to the base oil of lubricating viscosity is a minor wear-inhibiting amount, and is usually within the proportions given above.

The amine salts of dihydrocarbyl esters of thiophosphoric acids employed as component designated 1) in Embodiment E are comprised of the oil-soluble amine salts (preferably the aliphatic monoamine salts) of one or more dihydrocarbyl esters of a thiophosphoric acid, which esters can be derived from a tetrathiophosphoric acid, a trithiophosphoric acid, a dithiophosphoric acid, or a monothiophosphoric acid, or a mixture of any two or more of the foregoing. The amine salts of dihydrocarbyl esters of a dithiophosphoric acid are preferred, and the amine salts of dihydrocarbyl esters of a monothiophosphoric acid are particularly preferred.

Methods for the synthesis of such amine salts are well known to those of skill in the art, and are reported in the literature. For example, see PCT Published International Application WO 87/07638, published 17 December 1987.

When including component 3) in the practice of Embodiment E, use can be made of any of the ashless dispersants referred to hereinabove with reference to Embodiment B. When including component 4) in the practice of Embodiment E, use can be made of any of the sulfur-containing antiwear and/or extreme pressure agents referred to hereinabove with reference to Embodiment D.

The effectiveness of the phosphate combinations of this invention in oils of lubricating viscosity was illustrated by means of 4-ball wear tests conducted using a mineral oil based hydraulic fluid containing 200-300 ppm of phosphorus as a phosphate combination of this invention. The tests were conducted at 54,4°C (130°F) for 60 minutes while operating the 4-ball machine at 1800 rpm with a 40 kg load. In duplicate determinations a blend containing approximately 300 ppm of phosphorus as the phosphate combination gave wear scar diameters of 0.58 and 0.68 mm. Duplicate determinations with a blend containing approximately 200 ppm of phosphorus as the phosphate combination resulted in scars of 0.61 and 0.57 mm. The scars produced by the base oil were 0.90 and 0.95 mm in diameter.

The compositions of this invention are also useful as flame retardants for polymers such as polystyrene, polyphenylene oxide, blends of poly(2,6-dimethylphenylene oxide) and rubber-modified polystyrene, polyethylene, polypropylene, and the like.

## Claims

1. A composition which comprises a combination of (i) at least one hydrocarbon-soluble aryl phosphate of the formula
(RO)₃PO
wherein each R is, independently, phenyl or an alkyl-substituted phenyl group; and (ii) at least one hydrocarbonsoluble aryl polyphosphate of the formula 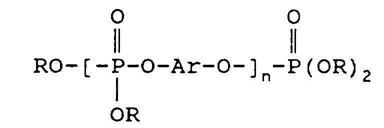 wherein each R is, independently, phenyl or an alkyl-substituted phenyl group, Ar is m-phenylene or an alkyl-substituted m-phenylene group, and n is a whole or fractional number from 1 to 4; said combination containing from 2 to 30% by weight of component (i).

2. A composition as claimed in Claim 1 wherein each R is phenyl and Ar is m-phenylene.

3. A composition as claimed in Claim 1 or 2 wherein at least 50% by weight of said aryl polyphosphate has the formula of Claim 1 wherein n is 1.

4. A composition as claimed in Claim 1 wherein each R is phenyl or nonylphenyl and at least 50% by weight of said aryl polyphosphate is m-phenylenebis(diphenyl phosphate).

5. A middle distillate engine fuel composition, which composition comprises a major proportion of a hydrocarbonaceous middle distillate fuel and a minor wear-inhibiting amount of a composition in accordance with any of claims 1-4.

6. A fuel composition in accordance with Claim 5 wherein said fuel additionally contains a minor effective amount of at least one fuel-soluble antioxidant, or at least one fuel-soluble conductivity improver, or at least one fuel-soluble metal deactivator, or at least one fuel-soluble icing inhibitor additive, or any combination of the foregoing.

7. A lubricant composition which comprises a major proportion of oil of lubricating viscosity and a minor wear-inhibiting amount of a composition in accordance any of claims 1-4.

8. A lubricant composition in accordance with Claim 7 wherein from 50 to 100 percent by volume of said oil of lubricating viscosity is a synthetic ester lubricating oil.

9. A lubricant composition in accordance with Claim 7 or Claim 8 wherein said composition additionally contains a minor amount of (A) one or more oil-soluble zinc hydrocarbyl dithiophosphates; or (B) one or more oil-soluble ashless dispersants containing basic nitrogen; or (C) a mixture of (A) and (B); or (D) one or more oil-soluble sulfur-containing antiwear and/or extreme pressure agents, and optionally one or more oil-soluble ashless dispersants containing basic nitrogen, and optionally one or more oil-soluble zinc dihydrocarbyl dithiophosphates; or (E) at least one oil-soluble amine salt of at least one dihydrocarbyl ester of a thiophosphoric acid, and optionally one or more oil-soluble ashless dispersants containing basic nitrogen, and optionally one or more oil-soluble sulfur-containing antiwear and/or extreme pressure agents.

10. A process for the preparation of a composition as claimed in any one of claims 1 to 4 which process comprises (a) reacting from 1.9 to 2.1 equivalents of phenol or alkyl-substituted phenol with one equivalent of phosphoryl trihalide, and (b) reacting the intermediate product formed in (a) without any purification with from 0.5 to 0.6 equivalents of resorcinol or alkyl-substituted resorcinol per equivalent of phosphoryl trihalide employed in (a), said reactions being conducted in the presence of a Lewis acid catalyst or in the presence of an at least stoichiometric amount of hydrogen halide acceptor.

11. A process for the preparation of a composition according to any one of claims 1 to 4, which process comprises (a) reacting from 0.5 to 0.6 equivalents of resorcinol and/or alkyl-substituted resorcinol with one equivalent of phosphoryl trihalide, and (b) reacting the intermediate product formed in (a) without any purification with from 1.9 to 2.1 equivalents of phenol and/or alkyl-substituted phenol per equivalent of phosphoryl trihalide employed in (a), said reactions being conducted in the presence of Lewis acid catalyst or in the presence of an at least stoichiometric amount of hydrogen halide acceptor.

12. A method of inhibiting wear of interacting metal surfaces which comprises providing as a lubricant for such interacting metal surfaces a lubricant composition in accordance with any of claims 7-9.

## Patentansprüche

1. Zusammensetzung aus einer Kombination aus (i) mindestens einem in Kohlenwasserstoffen löslichen Arylphosphat der Formel
(RO)₃PO,
in der jeder Rest R, unabhängig voneinander, Phenyl oder eine alkylsubstituierte Phenylgruppe darstellt, und
(ii) mindestens einem in Kohlenwasserstoffen löslichen Arylphosphat der Formel 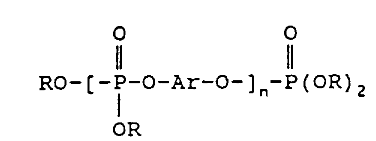 in der jeder Rest R, unabhängig voneinander, Phenyl oder eine alkylsubstituierte Phenylgruppe und Ar m-Phenylen oder eine alkylsubstituierte m-Phenylengruppe darstellt und n eine ganze Zahl oder Bruchzahl von 1 bis 4 bedeutet, wobei die Kombination 2 bis 30 Gew.-% der Komponente (i) enthält.

2. Zusammensetzung gemäß Anspruch 1, in der R Phenyl und Ar m-Phenylen ist.

3. Zusammensetzung gemäß Anspruch 1 oder 2, in der mindestens 50 Gew.-% des Arylpolyphosphonats einer Formel des Anspruchs 1 entspricht, in der n = 1 ist.

4. Zusammensetzung gemäß Anspruch 1, in der jeder Rest R Phenyl oder Nonylphenyl ist und mindestens 50 Gew.-% des Arylpolyphospates m-Phenylenbis-(diphenylphosphat) darstellen.

5. Motortreibstoffzusammensetzung aus Mitteldestillat aus einen Hauptanteil an Kohlenwasserstoffmitteldestillattreibstoff und einer kleineren verschleißinhibierenden Menge einer Zusammensetzung gemäß einem der Ansprüche 1 - 4.

6. Treibstoffzusammensetzung gemäß Anspruch 5, die zusätzlich eine kleinere, wirksame Menge mindestens eines öllöslichen Antioxidans, mindestens einen öllöslichen Leitzfähigkeitsverbesserer, mindestens einen öllöslichen Metalldesaküvator oder mindestens ein öllösliches Frostschutzmitteladditiv oder eine Kombination derselben enthält.

7. Schmiermittelzusammensetzung, enthaltend einen Hauptanteil eines Öls mit Schmierviskosität und eine kleinere verschleißinhibierende Menge einer Zusammensetzung gemäß einem der Ansprüche 1 - 4.

8. Schmiermittelzusammensetzung gemäß Anspruch 7, in der es sich bei 50 bis 100 Vol.-% des Öls mit Schmierviskosität um ein Schmieröl aus einem synthetischen Ester handelt.

9. Schmiermittelzusammensetzung gemäß Anspruch 7 oder 8, die zusätzlich eine kleinere Menge (A) eines oder mehrerer öllöslicher Zinkhydrocarbyldithiophosphate oder (B) eines oder mehrerer öllöslicher, basischen Stickstoff enthaltender aschefreier Dispergiermittel oder (C) ein Gemisch aus (A) und (B) oder (D) ein oder mehrere öllösliche schwefelhaltige Antiverschleiß- und/oder Extremdruckmittel und wahlweise ein oder mehrere basischen Stickstoff enthaltende aschefreie Dispergiermittel und wahlweise ein oder mehrere öllösliche Zinkdihydrocarbyldithiophosphate oder (E) mindestens ein öllösliches Aminsalz mindestens eines Dihydrocarbylesters einer Thiophosphorsäure und ggf. ein oder mehrere öllösliche, basischen Stickstoff enthaltende aschefreie Dispergiermittel und wahlweise ein oder mehrere öllösliche schwefelhaltige Antiverschleiß- und/oder Extremdruckmittel enthält.

10. Verfahren zur Herstellung einer Zusammensetzung gemäß einem der Ansprüche 1 - 4, bei dem man (a) 1,9 bis 2,1 Äquivalente Phenol oder eines alkylsubstituierten Phenols mit einem Äquivalent Phosphortrihalogenid umsetzt und (b) das in (a) gebildete Intermediat ohne Aufreinigung mit 0,5 bis 0,6 Äquivalenten Resorchin oder einem alkylsubstituierten Resorchin pro in Schritt (a) verwendetem Äquivalent an Phosphortrihalogenid umsetzt, wobei diese Umsetzungen in Anwesenheit einer Lewissäure als Katalysator oder in Anwesenheit einer mindestens stöchiometrischen Menge eines Halogenwasserstoffakzeptors erfolgen.

11. Verfahren zur Herstellung einer Zusammensetzung gemäß einem der Ansprüche 1 - 4, bei dem man (a) 0,5 bis 0,6 Äquivalente Resorchin und/oder eines alkylsubstituierten Resorchins mit einem Äquivalent Phosphortrihalogenid umsetzt und (b) das in Schritt (a) gebildete Zwischenprodukt ohne Aufreinigung mit 1,9 bis 2,1 Äquivalenten Phenol und/oder eines alkylsubstituierten Phenols pro in Schritt (a) verwendetem Äquivalent an Phosphoryltrihalogenid umsetzt, wobei diese Umsetzungen in Anwesenheit einer Lewissäure als Katalysator oder in Anwesenheit einer mindestens stöchiometrischen Menge Halogenwasserstoffakzeptor erfolgen.

12. Verfahren zur Verschleißinhibition an aufeinander einwirkenden Metalloberflächen, bei dem man eine Schmiermittelzusammensetzung gemäß einem der Ansprüche 7 bis 9 als Schmiermittel für Metalloberflächen verwendet.

## Revendications

1. Composition qui comprend une association (i) d'au moins un phosphate d'aryle, soluble dans les hydrocarbures, répondant à la formule
(RO)₃PO
dans laquelle chaque groupe R représente, indépendamment, un groupe phényle ou un groupe phényle à substituant alkyle ; et (ii) d'au moins un polyphosphate d'aryle, soluble dans les hydrocarbures, répondant à la formule 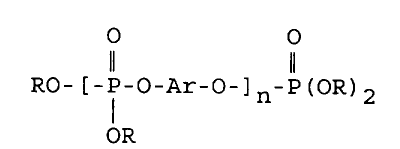 dans laquelle chaque groupe R représente, indépendamment, un groupe phényle ou un groupe phényle à substituant alkyle, Ar représente un groupe m-phénylène ou un groupe m-phénylène à substituant alkyle, et n est un nombre entier ou une fraction d'un nombre entier de 1 à 4 ; ladite association contenant 2 à 30 % en poids du constituant (i).

2. Composition suivant la revendication 1, dans laquelle chaque groupe R représente un groupe phényle et Ar représente un groupe m-phénylène.

3. Composition suivant la revendication 1 ou 2, dans laquelle au moins 50 % en poids du polyphosphate d'aryle répond à la formule suivant la revendication 1, dans laquelle n est égal à 1.

4. Composition suivant la revendication 1, dans laquelle chaque groupe R représente un groupe phényle ou nonylphényle et au moins 50 % en poids du polyphosphate d'aryle consistent en m-phénylènebis(diphénylphosphate).

5. Composition de carburant pour moteur à base de distillat moyen, composition qui comprend une proportion dominante d'un carburant consistant en un distillat moyen hydrocarboné et une petite quantité, inhibant l'usure, d'une composition suivant l'une quelconque des revendications 1 à 4.

6. Composition de carburant suivant la revendication 5, dans laquelle le carburant contient en outre une petite quantité efficace d'au moins un antioxydant soluble dans le carburant, ou d'au moins un agent d'amélioration de conductivité, soluble dans le carburant, ou d'au moins un désactivateur de métaux soluble dans le carburant, ou d'au moins un additif inhibiteur de givrage soluble dans le carburant, ou de n'importe quelle association des constituants précités.

7. Composition de lubrifiant qui contient une proportion dominante d'une huile de viscosité propre à la lubrification et une petite quantité inhibitrice d'usure d'une composition suivant l'une quelconque des revendications 1 à 4.

8. Composition de lubrifiant suivant la revendication 7, dans laquelle 50 à 100 % en volume de l'huile de viscosité propre à la lubrification consistent en une huile lubrifiante du type ester synthétique.

9. Composition de lubrifiant suivant la revendication 7 ou la revendication 8, qui contient en outre une petite quantité (A) d'un ou plusieurs hydrocarbyl-dithio-phosphates de zinc solubles dans l'huile ; ou (B) d'un ou plusieurs dispersants sans cendres, solubles dans l'huile, contenant de l'azote basique ; ou (C) d'un mélange de (A) et (B) ; ou (D) d'un ou plusieurs agents anti-usure et/ou extrême-pression contenant du soufre, solubles dans l'huile, et, facultativement, d'un ou plusieurs dispersants sans cendres, solubles dans l'huile, contenant de l'azote basique et, facultativement, d'un ou plusieurs dihydrocarbyl-dithio-phosphates de zinc solubles dans l'huile ; ou (E) d'au moins un sel d'amine, soluble dans l'huile, d'au moins un ester de dihydrocarbyle d'un acide thiophosphorique et, facultativement, d'un ou plusieurs dispersants sans cendres, solubles dans l'huile, contenant de l'acide basique, et, facultativement, d'un ou plusieurs agents anti-usure et/ou extrême-pression contenant du soufre, solubles dans l'huile.

10. Procédé de préparation d'une composition suivant l'une quelconque des revendications 1 à 4, procédé qui comprend (a) la réaction de 1,9 à 2,1 équivalents de phénol ou d'un phénol à substituant alkyle avec un équivalent d'un trihalogénure de phosphoryle, et (b) la réaction du produit intermédiaire formé en (a) sans aucune purification avec 0,5 à 0,6 équivalent de résorcinol ou d'un résorcinol à substituant alkyle par équivalent de trihalogénure de phosphoryle utilisé en (a), lesdites réactions étant conduites en présence d'un catalyseur du type acide de Lewis ou en présence d'une quantité au moins stoechiométrique d'un accepteur d'halogénure d'hydrogène.

11. Procédé de préparation d'une composition suivant l'une quelconque des revendications 1 à 4, procédé qui comprend (a) la réaction de 0,5 à 0,6 équivalent de résorcinol et/ou d'un résorcinol à substituant alkyle avec un équivalent d'un trihalogénure de phosphoryle, et (b) la réaction du produit intermédiaire formé en (a) sans aucune purification avec 1,9 à 2,1 équivalents de phénol et/ou d'un phénol à substituant alkyle par équivalent de trihalogénure de phosphoryle utilisé en (a), lesdites réactions étant conduites en présence d'un catalyseur du type acide de Lewis ou en présence d'une quantité au moins stoechiométrique d'un accepteur d'halogénure d'hydrogène.

12. Procédé pour inhiber l'usure de surfaces métalliques en interaction, qui consiste à fournir comme lubrifiant pour ces surfaces métalliques en interaction une composition de lubrifiant suivant l'une quelconque des revendications 7 à 9.
